# EUROPEAN PATENT APPLICATION

(11) **EP 3 954 455 A1**
(43) Date of publication of application: **16.02.2022**
(21) Application number: 20787423.1
(22) Date of filing: 27.03.2020
(51) Int. Cl.: B01D 61/02, C02F 1/44, C02F 103/08

(54) **SUBMARINE DESALINATION PLANT FOR DESALINATING SEAWATER BY MEANS OF INVERSE OSMOSIS AND METHOD FOR ARRANGING THE SUBMARINE DESALINATION PLANT ON THE SEABED**

(30) Priority: 12.04.2019 ES 201930336
(71) Applicant: M. Torres Diseños Industriales, S.A., 31119 Torres de Elorz (Navarra) (ES)
(72) Inventor: TORRES MARTINEZ, Manuel, 31119 TORRES DE ELORZ (NAVARRA) (ES)
(74) Representative: Evens, Paul Jonathan
(86) International application number: PCT/ES2020/070208
(87) International publication number: WO 2020/208279

(57) **Abstract**

The invention relates to a submarine desalination plant for desalinating seawater by means of reverse osmosis and to a method for arranging the submarine desalination plant on the seabed, the desalination plant comprising membranes (1) arranged on the seabed (S) that use the difference in pressure between the outside and the inside of the membranes (1) to obtain desalinated water, each membrane (1) having a flat elongate shape, the membranes being arranged in parallel, a gap being defined between the membranes (1) through which seawater circulates; pumping means (26) for pumping the desalinated water; at least one pipe (2) for removing the desalinated water, which is arranged such that it passes transversely through the membranes (1), establishing a passage for desalinated water to pass between the membranes (1) and the pipe (2); and a support structure (3) for holding the membranes (1) and pipe (2), the structure (3) being in fluid communication with the pipe (2) by means of at least one column (4) through which the desalinated water is carried.

## Description

### Technical field

The present invention relates to the desalination of seawater, proposing a facility for carrying out a desalination process by means of reverse osmosis using membranes. The membranes can be arranged at a certain depth such that the seawater pressure at said depth is taken advantage of and used as the only inlet pressure to the desalination plant in order to carry out the desalination process.

### State of the art

The development of a society today is closely linked to the availability of water, and, therefore, there is a growing need for this so very valuable and so very scarce commodity. While the sea constitutes the most sustainable source for a massive water catchment, it in turn requires desalinating said water so that it can be used in certain applications, such as irrigation, agriculture, industrial use or consumption.

Current desalination processes are not very energy efficient and consume large amounts of energy, which has led to worldwide desalination ratios not being very high today. Achieving more energy efficient desalination processes is the key to development for mankind. It would allow, for example, harnessing the abundant amount of seawater, 96.5 % with respect to the overall amount of water on the planet, to obtain desalinated water in drought-stricken areas and would promote water treatments in general.

Desalination technology is widely used today as the most advantageous technology from the investment and operation perspective is the reverse osmosis using semipermeable membranes, although energy consumption continues to be fairly high in processes of this type. Operating costs mostly depend on the cost of energy and on the type of water to be treated.

Reverse osmosis essentially consists of passing water through the semipermeable membrane the water from the side where the most concentrated solution (seawater with its dissolved salts) is found to the opposite side, without the salts passing through. It is well known that the pressure needed to achieve reverse osmosis depends on the amount of salts dissolved in the water and on the degree of desalination to be obtained.

The conventional desalination process comprises a prior step of pretreating the water, which involves the use of a series of chemical reagents which prepare it for successive steps, but in turn it entails generating waste in the form of contaminated water discharge. This pre-treatment is used essentially to prevent the inside of the reverse osmosis membranes from soiling, which could directly affect desalination efficiency. These treatments prior to reverse osmosis are contemplated in all conventional desalination plants, so plants must be dimensioned to include them from the start.

The membranes commonly used in these processes have conversion rates of between 35 % and 45 % in their optimal working range. This water conversion rate involves an increase in osmotic pressure of the water which is taken into account when estimating the suitable flow rates per membrane, and in turn depend on current membrane design, generally with a spiral winding configuration, on the intrinsic properties of the membrane, and on the quality of the water to be treated.

In the most extensive desalination facilities, the membranes are arranged in pressure vessels which are manufactured from a glass fibre and polyester resin composite material. The composite materials are ideal for use in this type of application not only because of their mechanical properties, but also because they are capable of preventing corrosion upon contact with the seawater.

Additionally, the pressure required for the reverse osmosis process depends for the most part on the osmotic pressure of the water, and in conventional facilities, said pressure gradually increases along the length of the pressure vessel because of the increase in concentration of the seawater due to the conversion thereof into desalinated water. This is why the necessary inlet pumping pressure into the facility must be high, higher than the minimum pressure required in the initial area of a desalination vessel and sufficient for a lower production inferior in the end part of the vessel, given that it must operate regardless of the osmotic pressure at each point of the vessel. The energy consumption of this configuration is high (it involves about 75 % of the cost of desalinated water) due to the significant pressure to which the incoming saltwater must be raised, even in the case of incorporating systems for recovering pressure from brine.

Document KR100417797B1 discloses a facility for producing fresh water and saltwater using the pressure of the depth of the water and reverse osmosis. The facility has desalination membranes arranged on the seabed that use the difference in pressure between the outside and the inside of the membranes to desalinate the water, an extraction pipe for taking the desalinated water to a ship and pumping means which are arranged in the ship for pumping the desalinated water from the desalination membranes to the ship.

The facility thereby takes advantage of the difference in pressure between the outside and the inside of the desalination membranes to desalinate the seawater and obtain desalinated water. However, the facility is based on a set of conventional cylindrical desalination membranes, wherein the membranes are made up of a set of spiral-wound layers for removing the desalinated water at the ends of the cylindrical shape of the winding of layers, whereby, given the cylindrical and compact configuration of the membranes used, a limited space on the seabed is covered, so the water desalination ratio is limited. Furthermore, the membranes are arranged vertically, so the pressure exerted by the seawater in the upper part of the membrane is less than that exerted in the lower part. By way of example, pressure under water can be found to vary about 1 bar for every 10 metres of vertical depth.

Moreover, given the depth at which the membranes have to be arranged so that desalination can take place by means of reverse osmosis, maintenance and cleaning costs of the facility are high since they require specialized teams to operate at said depths.

It is therefore necessary to devise a solution which allows abundant amounts of seawater to be desalinated, maximising the advantages offered by operating at certain submarine depths as the initial pumping pressure needs are reduced, and wherein maintenance and cleaning costs of the facility are reduced as much as possible.

### Object of the invention

The object of the invention is a submarine desalination plant which allows a more sustainable seawater desalination process to be carried out by means of using desalination reverse osmosis membranes, taking advantage of the seawater pressure seawater based on depth and using it as the only inlet pressure to the desalination plant for carrying out the desalination process.

The water obtained by the desalination plant is preferably applicable for agricultural and industrial applications, which do not require additional drinking water treatment processes for consumption, although it would be feasible to incorporate extra steps to the treatment of the water obtained by the desalination plant.

The submarine desalination plant for desalinating water by means of reverse osmosis proposed by the invention comprises seawater desalination membranes which are submerged on the seabed, such that the difference in pressure between the outside and the inside of the desalination membranes is used to desalinate the seawater and obtain desalinated water. The submarine desalination plant also comprises at least one extraction pipe for removing the water desalinated by the desalination membranes and pumping means for pumping the desalinated water.

The pressure per seawater column that the desalination plant withstands is sufficient to generate the reverse osmosis process through the desalination membranes. The pressure for which reverse osmosis takes place must be greater than the difference in osmotic pressure between the feed (seawater) and the permeate (desalinated water), the pressure of the permeate and pressure losses through the desalination plant.

According to the invention, each desalination membrane has a flat elongate shape, the desalination membranes being arranged in parallel, a gap being defined between the desalination membranes through which seawater circulates. The extraction pipe is arranged passing transversely through the desalination membranes, establishing a passage for desalinated water to pass between the desalination membranes and the extraction pipe. The shape and arrangement of the membranes and of the extraction pipe allows the occupied seabed space to be maximised, and therefore abundant amounts of seawater can be desalinated.

The submarine desalination plant further comprises a support structure for holding the desalination membranes and the extraction pipe on the seabed, the support structure being in fluid communication with the extraction pipe by means of at least one column through which the desalinated water is carried from at least one of the ends of the extraction pipe to the support structure.

Preferably, the desalination membranes are arranged horizontally on the support structure, such that the membranes are arranged in a position substantially parallel to the support structure and the seabed. The horizontal arrangement of the membranes proposed by the invention thereby allows all the points of the desalination membranes to be arranged at a substantially identical distance with respect to the seabed and, therefore, all those points to be subjected to a similar pressure, because as is known, pressure increases with depth (about 1 bar for every 10 metres of vertical depth).

The support structure comprises a support base connecting with a submarine hose for sending the desalinated water to a storage point; support feet for holding the support structure on the seabed; and connection openings arranged in the support base for establishing a coupling with the columns, such that the desalinated water is carried from the ends of the extraction pipe to the support base connecting with the submarine hose.

The submarine desalination plant further comprises at least one electrical connector having a first part arranged in one of the connection openings; a second part arranged in the column corresponding to the connection opening in the which the first part of the electrical connector is arranged; and a third part which is attached to the first part and has an electrical connection element that can be movably actuated so as to electrically connect the first and second parts to one another. The first part of the electrical connector has a first electric cable which is connected to a power supply line coming from the submarine hose; and the second part of the electrical connector has a second electric cable which is connected to the pumping means.

An electrical connector is thereby obtained in the coupling area between the support structure, which is the area of the desalination plant that the power supply line reaches, and the column, which is the area of the desalination plant where the pumping means of the desalinated water are preferably arranged as it is easier to take out for regular maintenance tasks.

The third part comprises a sleeve having an air inlet which is connected to a pneumatic supply line coming from the submarine hose; a piston which is attached to the electrical connection element, being the piston movable through the sleeve together with the electrical connection element, and a spring which is arranged surrounding the connection element and having a first end attached to the piston and a second end attached to the sleeve, such that the electrical connection element is movable, by the action of air, to a first position in which the electrical connection element electrically connects the first and second electric cables, and in the absence of air, the electrical connection element is movable, by action of the spring, to a second position in which the electric cables are disconnected.

The method for arranging the submarine desalination plant on the seabed is also an object of the invention. Said method comprises using a sea craft, transferring the support structure with the sea craft to a site location, arranging the support structure on the seabed, transferring the desalination membranes with the sea craft to the site location and arranging the desalination membranes on the support structure coupling the columns with the connection openings.

### Description of the figures

Figure 1 shows a perspective view of a preferred embodiment of the submarine desalination plant object of the invention.
Figure 2 shows a side view of the desalination plant of Figure 1.
Figure 3 shows another side view of the desalination plant of Figure 1.
Figure 4 shows a section view of the passage of desalinated water between the desalination membranes and the extraction pipe.
Figure 5 shows a section view of the passage of seawater between the additional pipe and the gap between desalination membranes.
Figure 6 is an enlarged detail of the passage of desalinated water between the desalination membranes and the extraction pipe.
Figure 7 is an enlarged detail of the passage of seawater between the additional pipe and the gap between desalination membranes.
Figure 8 shows a view of one of the halves of the desalination membranes, depicting the hollow inner space for the circulation of the desalinated water to the extraction pipe.
Figure 9 shows a connection opening and a column in an instant immediately before coupling.
Figure 10 shows the electrical connector in the instant immediately before coupling between opening and column.
Figure 11 shows the connection opening and the column of Figure 9 coupled together.
Figure 11A shows the check valve of the connection opening of the previous figure open.
Figure 12 shows the electrical connector when the connection opening and the column are coupled together.
Figures 13 to 19 show the method for installing the desalination plant on the seabed.

### Detailed description of the invention

The submarine desalination plant object of the invention which is shown in the preferred embodiment of the figures comprises desalination membranes (1) to desalinate seawater and obtain desalinated water, an extraction pipe (2) for removing the water desalinated by the membranes (1), pumping means (26) for pumping the desalinated water, a support structure (3) on which the membranes (1) and extraction pipe (2) are arranged, and columns (4) through which the desalinated water is carried from the ends of the extraction pipe (2) to the support structure (3).

The support structure (3) is connectable to a submarine hose (5) for sending the desalinated water to a storage point, which can be located, for example, on land or on an off-shore platform.

Different power, pneumatic, hydraulic and/or data supply lines that the desalination plant may require to suitably operate are taken through the submarine hose (5).

Unlike conventional cylindrical membranes, the desalination membranes proposed by the invention have a flat elongate shape which allows contact with the seawater to increase, maximising the amount of desalinated water.

Preferably, the desalination membranes have a flat rectangular shape with two larger sides and four smaller sides, two of the smaller sides having a short length and the other two shorter sides having a long length. For example, the desalination membranes are intended to be 4 metres in height and 50 metres in length, 4 metres corresponding to the smaller sides having a short length, and 50 metres corresponding to the smaller sides having a long length.

The membranes (1) are arranged in parallel and spaced apart, such that between the membranes (1) there is defined a gap through which the circulation of the seawater to be desalinated is favoured. As can be observed in the figures, the membranes are arranged in parallel, their larger sides facing one another.

The flat elongate shape of the membranes (1) favours establishing a larger separation between membranes (1) so as to ensure a simpler renewal of the seawater in contact with the membranes (1) and, therefore, reduced salinity at those points. In turn, this larger separation between membranes (1) reduces the risk of particle soiling of same, meaning that pretreatments are not indispensable.

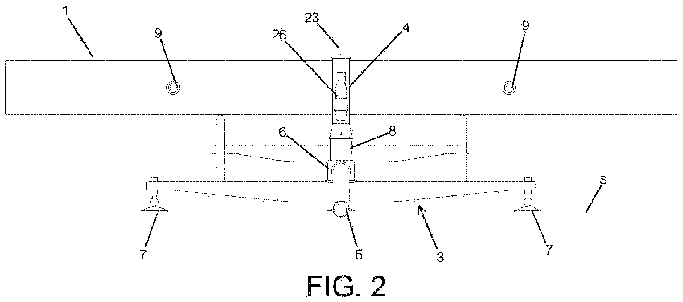

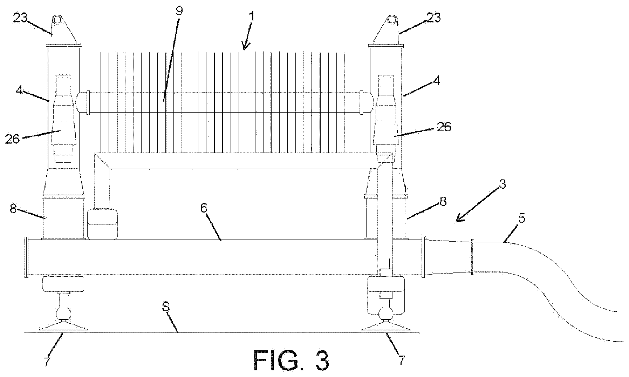

Likewise, the membranes are arranged horizontally on the support structure (3), and therefore they are arranged in a position parallel to the seabed (S). For example, as shown in Figures 2 and 3, the smaller sides having a long length of the membranes (1) are arranged parallel to the seabed (S), and the smaller sides having a short length are arranged perpendicular to the seabed (S). With this flat elongate shape of the membranes (1) and their horizontal arrangement on the seabed (S), the pressure exerted on the water column on the membranes is approximately identical at all points. Therefore, the horizontal arrangement of the smaller sides having a long length favours there not being any large variations in pressure between different areas of the membrane.

The support structure (3) is in fluid communication with the extraction pipe (2) by means of the columns (4). As shown in the figures, there are two columns (4), one connected to each end of the extraction pipe (2), and both two columns (4) connected to the support structure (3). In any case, the fluid communication between the extraction pipe (2) and the support structure (3) could be established through only one of the two columns (4).

The columns (4) have a tubular shape with an upper lateral part for establishing a fluid communication with one of the ends of the extraction pipe (2), and a lower part for establishing a fluid communication with the support structure (3).

The support structure (3) comprises a support base (6) connecting with the submarine hose (5) for sending the desalinated water to a storage point, support feet (7) for holding the support structure (3) on the seabed (S), and connection openings (8) arranged in the support base (6) for establishing a coupling with the columns (4), such that the desalinated water is carried from the ends of the extraction pipe (2) to the support base (6) connecting with the submarine hose (5).

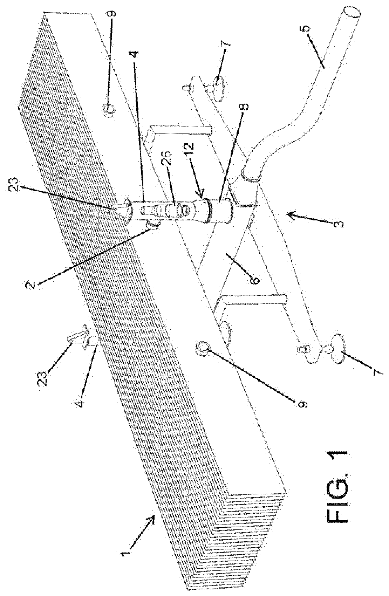

As shown in the example of Figures 1 to 3, the support base (6) consists of a longitudinal tank having the connection openings (8) in the upper part thereof and having the connection with the submarine hose (5) at a lateral end. The tank rests on one of its ends directly on one of the support feet (7), whereas at the opposite end the tank rests on a crossbeam which has one of the support feet (7) at each of its ends. Therefore, there are three support feet (7), the desalination plant resting on three points of the seabed (S).

Additionally, and to improve stability, the crossbeam and the longitudinal tank are connected to one another by means of an additional crossbeam and two lateral arms. As can be observed in the figures, the additional crossbeam is arranged on the longitudinal tank and the two lateral arms attach the additional crossbeam with the crossbeam. As can be observed in Figures 1 and 3, the lateral arms establish support with the membranes (1), improving stability.

The support feet (7) have ball and socket joints for adapting the support feet (7) to the seabed (S).

The extraction pipe (2) is arranged passing transversely through the desalination membranes (1), such that a passage of desalinated water to pass between the desalination membranes (1) and the extraction pipe (2) is established.

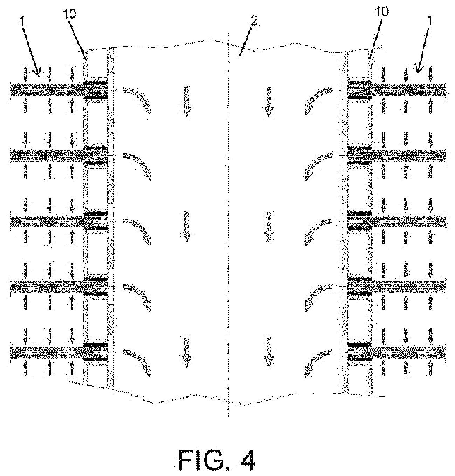

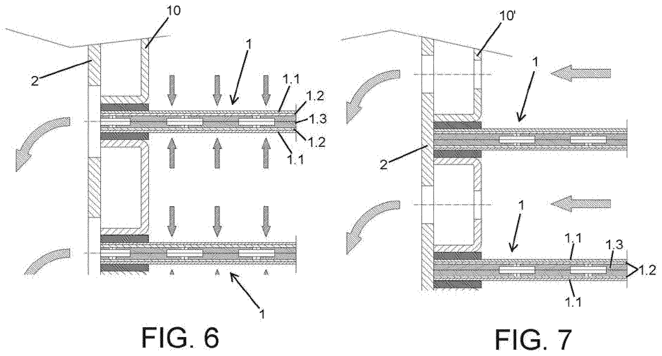

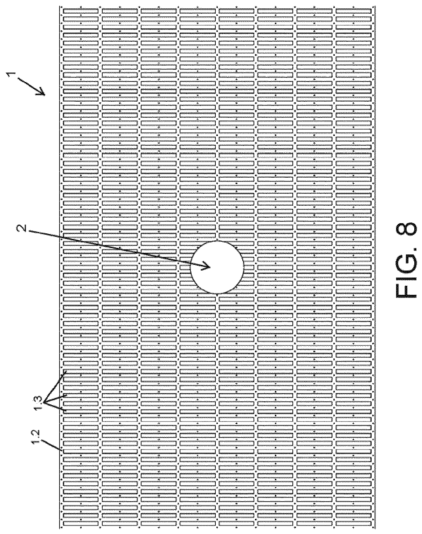

As can be observed in Figure 4 and in the detail of Figure 6, and particularly in Figure 8, the extraction pipe (2) is arranged passing transversely through the desalination membranes (1) through the centre of the larger sides of the membranes (1).

As can also be observed in said Figures 4 and 6, the membranes (1) have two halves between which there is defined a hollow inner space for the circulation of the desalinated water, each half having a reverse osmosis semipermeable membrane layer (1.1) for converting seawater into desalinated water, a microperforated layer (1.2) for allowing the desalinated water to pass into the hollow inner space, and both halves being attached to one another by a reinforcement layer (1.3).

Therefore, the seawater essentially passes transversely through the membranes (1) on their larger sides into the hollow inner space of the membranes (1), and from there it goes to the centre of the larger sides of the membranes (1), where the desalinated water discharges into the extraction pipe (2). The arrows depicted in the figures show the direction of the seawater to the membranes (1) and the direction of the desalinated water from the membranes (1) to the extraction pipe (2).

The semipermeable membrane layer (1.1) is arranged in contact on one of its sides with the seawater and on the other side it is in contact with the microperforated layer (1.2). The hollow inner space of the membranes (1) is formed by the reinforcement layer (1.3), which is arranged on the side of the microperforated layers (1.2) opposite the contact side with the membrane layers (1.1). The reinforcement layer (1.3) is manufactured in two parts, one for each half of the membrane (1). The reinforcement layer (1.3) helps the membranes (1) withstand the difference in pressure existing between the outside and the inside of the membranes at the depth where they are located.

The microperforated layer (1.2) and the reinforcement layer (1.3) are intended to be manufactured from a composite material, whereas the membrane layer (1.1) is a reverse osmosis membrane which can be formed by polyamide, cellulose acetate and polyester. In any case, the desalination membranes (1) may be made up of polymer materials having similar characteristics. Therefore, the membranes (1) can be manufactured on a large-scale industrial level by means of automatic composite material tape laying techniques.

The submarine desalination plant further comprises at least one additional pipe (9) which, like the extraction pipe (2), is arranged passing transversely through the desalination membranes (1), but in this case a passage for seawater to pass between the additional pipe (9) and the gap between desalination membranes (1) is established.

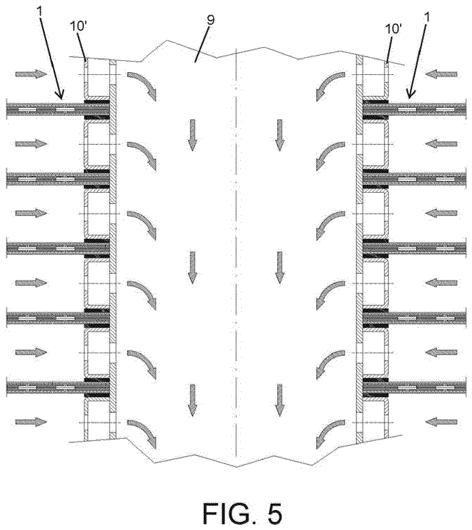

As can be observed in Figure 5 and in the detail of Figure 7, there are two additional pipes (9), one on each side of the extraction pipe (2). The purpose of the additional pipes (9) is to reduce the concentration of salinity created in the gaps between membranes (1) given the reverse osmosis phenomenon. The additional pipes (9) allow a continuous flow of seawater to be generated in the gap between membranes (1), renewing the water and keeping the concentration of salt in the areas in contact with the membranes (1) under control.

As a result of the existence of a controlled and low concentration of salt, the increase in osmotic pressure is low across the entire surface of the membranes (1), allowing to operate with lower pressures than in conventional desalination systems, and providing a stable operation. More pressure is therefore available for desalinating seawater, i.e., more permeate flow.

Pumps are intended to be used for forcing the circulation of seawater through the additional pipes (9).

Instead of using additional pipes (9), means for pumping water around the outside of the desalination plant causing a circulation of seawater in the gap between membranes (1) could be arranged.

As can be observed in Figures 4 a 7, the membranes (1) are separated from one another by means of separators (10) arranged on the larger sides of the membranes (1). The separators (10) are cylindrical parts which are arranged around the extraction pipe (2), thus improving its rigidity.

There are arranged around the additional pipes (9) other separators (10') identical to the separators (10) arranged around the extraction pipe (2) but unlike separators (10), these have a perforation for allowing seawater to pass between the additional pipe (9) and the gap between the desalination membranes (1). See Figure 7. Therefore, the desalination membranes (1) are further separated from one another by means of the additional separators (10') which are cylindrical parts arranged around the additional pipes (9).

The pumping means (26) are pumps used for pumping the desalinated water to the submarine hose (5). Preferably, the pumping means (26) are arranged in the extraction pipe (2) or in the columns (4). Even more preferably, the pumping means (26) are arranged in the lower part of the columns (4) connecting with the end of the extraction pipe (2).

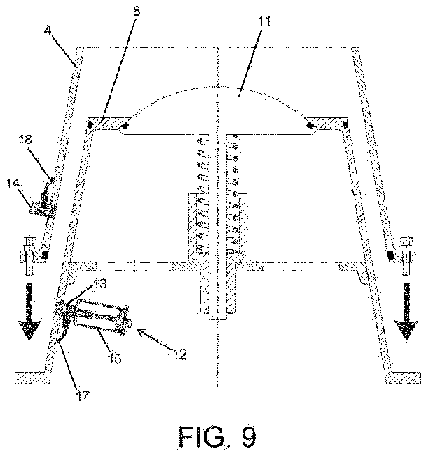

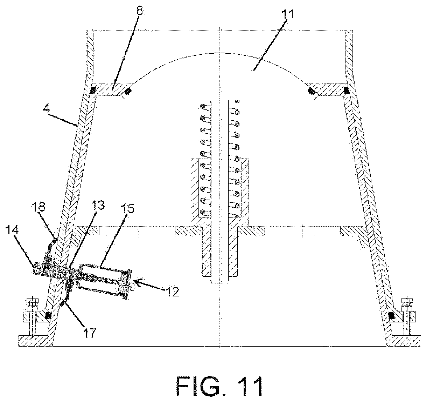

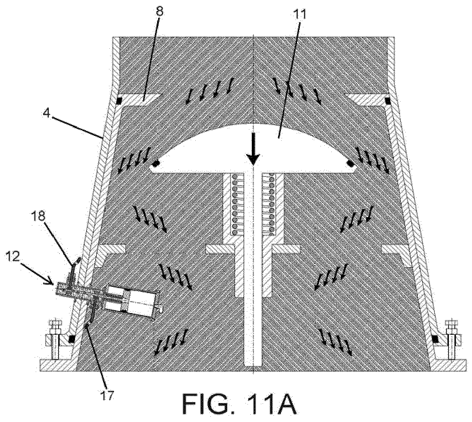

As shown in Figures 9 and 11, the connection openings (8) have a frustoconical shape with a gradual increase in the radius of the openings (8) from the upper part to the lower part thereof, and wherein the columns (4) have in the lower part thereof another frustoconical shape corresponding to the frustoconical shape of the openings (8). Therefore, the reciprocal frustoconical shapes allow a leak-tight coupling to be established between opening (8) and column (4), and furthermore allow a guiding to be established to facilitate coupling, which is favourable when operating a great depths.

As is also shown in Figures 9 and 11, each connection opening (8) has a check valve (11) which only allows the desalinated water to pass from the column (4) to the support base (6). The check valve (11) has a spring with an elastic constant which is overcome by the force of the flow of desalinated water going from the column (4) to the submarine hose (5), such that in the absence of the flow of water the valve (11) is closed, and when there is a flow of water the valve (11) opens (see Figure 11A). The valve (11) prevents the seawater from entering the support structure (3) when the columns (4) are uncoupled from the connection openings (8).

The columns (4) and/or the connection openings (8) are intended to have purge means for extracting the seawater that may have been stagnant on the inside before the coupling between the columns (4) and the openings (8) takes place.

As shown in said Figures 9 and 11, the connection opening (8) has a first sealing gasket in the upper part thereof for contacting the inside of the columns (4), and the column (4) has a second sealing gasket in the lower part thereof for contacting the outside of the connection openings (8). Moreover, the check valve (11) has a third sealing gasket for contacting the inside of the upper part of the connection opening (8). The sealing gaskets are depicted in the figures using a thick black line.

The submarine desalination plant has at least one electrical connector (12) for supplying power to the pumping means (26). Preferably there are two electrical connectors (12), and each one is arranged in the coupling between one of the connection openings (8) and its corresponding column (4).

Each electrical connector (12) has a first part (13) arranged in one of the connection openings (8) and a second part (14) arranged in the column (4) corresponding to the connection opening (8) in the which the first part (13) of the electrical connector (12) is arranged. The electrical connector (12) also has a third part (15), which is inside the connection opening (8) and attached to the first part (13). Said third part (15) has an electrical connection element (16) which can be movably actuated so as to electrically connect the first part (13) and the second part (14) to one another.

The first part (13) of the electrical connector (12) has a first electric cable (17) which is connected to the power supply line coming from the submarine hose (5) and the second part (14) of the electrical connector (12) has a second electric cable (18) which is connected to the pumping means (26). The second electric cable (18), and preferably both electric cables (17,18), are submarine cables configured for withstanding the pressure of the depth at which they are arranged.

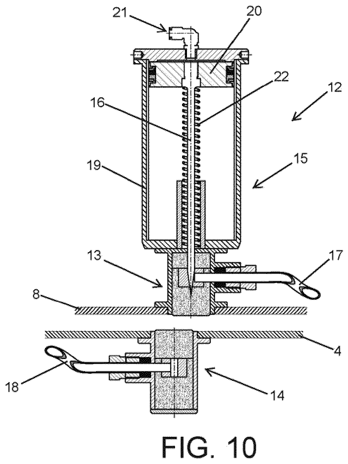

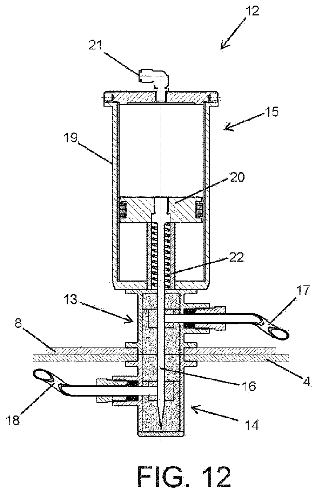

As can be observed in detail in Figures 10 and 12, the third part (15) of the electrical connector (12) is essentially a pneumatic cylinder. Said third part (15) comprises a sleeve (19), a piston (20) having the electrical connection element (16), an air inlet (21) and a spring (22).

The electrical connection element (16) is attached to the inner face of the piston (20), such that the piston (20) is axially movable through the inside of the sleeve (19) together with the electrical connection element (16). The spring (22) is arranged surrounding the electrical connection element (16) and has a first end which is attached to the inner face of the piston (20) and a second end which is attached to the bottom of the sleeve (19).

The air inlet (21) is connected to a pneumatic supply line which, like the power supply line, is a line coming from the submarine hose (5).

The air inlet (21) is arranged in the upper part of the sleeve (19), such that the air entering the sleeve (19) contacts the upper face of the piston (20) pushing it, whereby as shown in Figure 12, the electrical connection element (16) is movable, by the action of air, to a first position in which the electrical connection element (16) electrically connects the first and second electric cable (17,18), and in the absence of air, the electrical connection element (16) is movable, by action of the spring (22), to a second position in which the electric cables (17,18) are disconnected. In standby, the spring (22) is expanded such that the piston (20) is located at the upper part of the sleeve (19), and when air is introduced into the sleeve (19), the piston (20) moves, overcoming the compressive force of the spring (22), and causing the electrical connection element (16) to connect both electric cables (17,18).

The first part (13) and second part (14) of the electrical connector (12) are filled with an elastically deformable material with shape memory. Preferably, the material is rubber or silicone, and even more preferably it has a hardness comprised between 20 and 60 shore. Furthermore, it has saline resistance properties. Moreover, the electrical connection element (16) has a pointed end for passing through the elastically deformable material. As can be observed in the figures, the electrical connection element (16) is an elongate needle-shaped element.

When the electrical connection element (16) is removed and no longer connecting the cables (17,18), given the elastic recovery capacity of the filling material with the parts (13,14), the hole created by the action of the electrical connection element (16) is closed, assuring the tightness of the electric cable connections. Furthermore, rubber is a material assuring leak-tightness, which is particularly relevant when the connection openings (8) are separated from the columns (4), as observed in Figure 10, since the connections are exposed to seawater in that situation.

The columns (4) have anchorings (23) in the upper part thereof for arranging a crossbeam (24) which is connectable to a sea craft (25) for transferring the desalination plant.

In the event that the membranes (1) or another element of the desalination plant requires a repair or maintenance operation, sea craft (25) can be used to transfer them to land or to an off-shore site, so specialised equipment does not need to be used to perform said operations at great depths.

Furthermore, the craft (25) allows the location of the site of the desalination plant to be readily changed, such that it is possible to find a seawater quality that is more in line with desalination needs. Therefore, providing a submarine desalination plant and a flexible location allows, on one hand, a direct seawater intake without the need for specific infrastructures for that purpose, and on the other, a seawater catchment in conditions of cleanliness such that they ensure proper operation of the desalination membranes without the need for pretreatments. The absence of pretreatments, which necessarily involve adding different chemicals to the water, reduces the usual levels of contamination of the water in the desalination processes, with the negative environmental impact this entails.

With that being the case, the seawater located in the gap between membranes (1), given the reverse osmosis phenomenon and the difference in pressure between the outside and the inside of the membranes (1), tends to pass into the hollow inner space of the membranes (1), being converted into desalinated water, and from there to the extraction pipe (2). The pumping means (26) cause the desalinated water to pass from the extraction pipe (2) to the columns (4), overcoming the force of the spring of the check valve (11), and the desalinated water passing into the support structure (3), to finally be carried to the submarine hose (5) from where it is taken to the storage point located on land or on an off-shore platform.

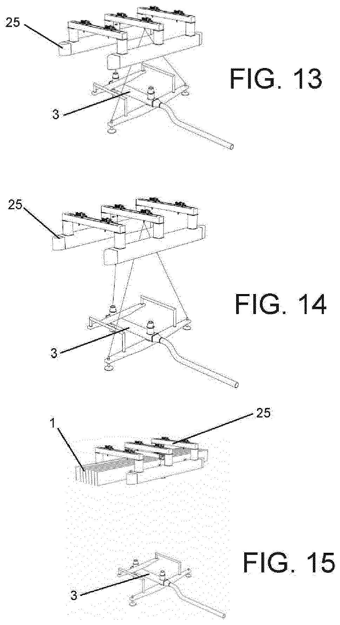

Figures 13 to 19 show the method for installing the desalination plant on the seabed (S).

The sea craft (25) used for the facility is preferably a catamaran-type craft provided with two floats attached by means of overhead cranes having pulley blocks for arranging and transferring the membranes (1) and the support structure (3).

First, as can be observed in Figure 13, the sea craft (25) transports the support structure (3) to the site location of the desalination plant. To that end, the structure (3) is secured by means of the pulley blocks at three points in connection with the three support feet (7). Next, by means of the pulley blocks, the support structure (3) is lowered in order to arrange it on the seabed (S), as shown in Figure 14, wherein it is seated as a result of the ball and socket joints of the support feet (7).

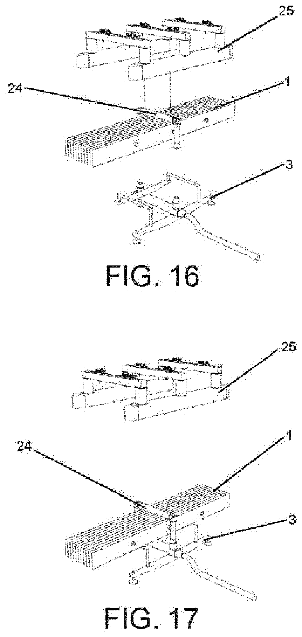

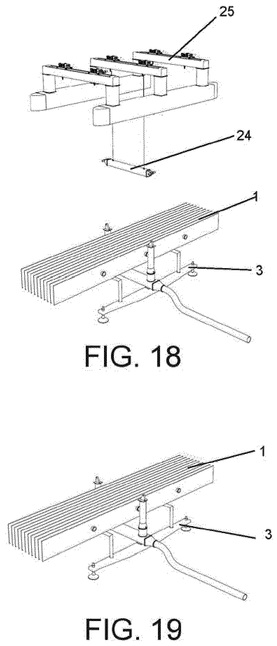

Secondly, the sea craft (25) is used for transferring the desalination membranes (1) together with the columns (4) coupled to the ends of the extraction pipe (2) to the site location, see Figure 15. To that end, the pulley blocks are fixed to the crossbeam (24) which is arranged between the anchorings (23) of the columns (4). Given that the membranes (1) have the flat elongate shape, it is advisable to transport the membranes submerged or partially submerged in the water, since because of their length, lateral winds can generate a sail effect which hinders navigation of the craft (25). Next, the set of desalination membranes (1) is lowered, see Figure 16, until the columns (4) couple into the connection openings (8), see Figure 17, the frustoconical shape facilitating the coupling between openings (8) and columns (4). After the coupling, the first (13) and second (14) parts of the electrical connector (12) are aligned so that the power supply can be transmitted to the pumping means (26). Lastly, the crossbeam (24) is removed, see Figure 18, the desalination plant being arranged on the seabed to start working to desalinate seawater (See Figure 19).

## Claims

1. A submarine desalination plant for desalinating seawater by means of reverse osmosis comprising:
• seawater desalination membranes (1) which are arranged on the seabed (S), such that the difference in pressure between the outside and the inside of the desalination membranes (1) is used to desalinate the seawater and obtain desalinated water,
• at least one extraction pipe (2) for removing the water desalinated by the desalination membranes (1), and
• pumping means (26) for pumping the desalinated water,
**characterised in that** each desalination membrane (1) has a flat elongate shape, the desalination membranes (1) being arranged in parallel, a gap being defined between the desalination membranes (1) through which seawater circulates;
and **in that** the extraction pipe (2) is arranged passing transversely through the desalination membranes (1), establishing a passage for desalinated water to pass between the desalination membranes (1) and the extraction pipe (2);
and **in that** it further comprises a support structure (3) for holding the desalination membranes (1) and the extraction pipe (2) on the seabed, the support structure (3) being in fluid communication with the extraction pipe (2) by means of at least one column (4) through which the desalinated water is carried from at least one of the ends of the extraction pipe (2) to the support structure (3).

2. The submarine desalination plant according to the preceding claim, wherein the desalination membranes (1) are arranged horizontally on the support structure (3), such that the membranes (1) are arranged in a position substantially parallel to the support structure (3) and the seabed (S).

3. The submarine desalination plant according to any one of the preceding claims, wherein the support structure (3) comprises:
• a support base (6) connecting with a submarine hose (5) for sending the desalinated water to a storage point,
• support feet (7) for holding the support structure (3) on the seabed (S), and
• connection openings (8) arranged in the support base (6) for establishing a coupling with the columns (4), such that the desalinated water is carried from the ends of the extraction pipe (2) to the support base (6) connecting with the submarine hose (5).

4. The submarine desalination plant according to the preceding claim, wherein the connection openings (8) have a frustoconical shape with a gradual increase in the radius of the openings (8) from the upper part to the lower part thereof, and wherein the columns (4) have in the lower part thereof another frustoconical shape corresponding to the frustoconical shape of the openings (8), such that a leak-tight and guided coupling is established between the openings (8) and the columns (4).

5. The submarine desalination plant according to any one of claims 3 to 4, wherein each connection opening (8) has a check valve (11) which only allows the desalinated water to pass from the column (4) to the support base (6).

6. The submarine desalination plant according to any one of claims 3 to 5, further comprising at least one electrical connector (12) having:
• a first part (13) arranged in one of the connection openings (8),
• a second part (14) arranged in the column (4) corresponding to the connection opening (8) in the which the first part (13) of the electrical connector (12) is arranged, and
• a third part (15) which is attached to the first part (13) and has an electrical connection element (16) that can be movably actuated so as to electrically connect the first part (13) and the second part (14) to one another;
∘ the first part (13) of the electrical connector (12) has a first electric cable (17) which is connected to a power supply line coming from the submarine hose (5); and
∘ the second part (14) of the electrical connector (12) has a second electric cable (18) which is connected to the pumping means (26).

7. The submarine desalination plant according to the preceding claim, wherein the third part (15) comprises:
• a sleeve (19) having an air inlet (21) which is connected to a pneumatic supply line coming from the submarine hose (5);
• a piston (20) which is attached to the electrical connection element (16), the piston (20) being movable through the sleeve (19) together with the electrical connection element (16), and
• a spring (22) which is arranged surrounding the connection element (16) and having a first end attached to the piston (20) and a second end attached to the sleeve (19),
such that the electrical connection element (16) is movable, by the action of air, to a first position in which the electrical connection element (16) electrically connects the first and second electric cables (17,18), and in the absence of air, the electrical connection element (16) is movable, by action of the spring (22), to a second position in which the electric cables (17,18) are disconnected.

8. The submarine desalination plant according to any one of claims 6 to 7, wherein the first part (13) and second part (14) of the electrical connector (12) are filled with an elastically deformable material with shape memory, the electrical connection element (16) having a pointed end for passing through the elastically deformable material.

9. The submarine desalination plant according to the preceding claim, wherein the elastically deformable material has a hardness comprised between 20 and 60 shore and has saline resistance properties.

10. The submarine desalination plant according to any one of claims 8 to 9, wherein the elastically deformable material is rubber or silicone.

11. The submarine desalination plant according to any one of the preceding claims, wherein the pumping means (26) for pumping the desalinated water are arranged in the extraction pipe (2) or in the columns (4).

12. The submarine desalination plant according to any one of claims 3 to 11, wherein the support feet (7) have ball and socket joints for adapting the support feet (7) to the seabed (S).

13. The submarine desalination plant according to any one of the preceding claims, further comprising at least one additional pipe (9) which is arranged passing transversely through the desalination membranes (1), establishing a passage for seawater to pass between the additional pipe (9) and the gap between desalination membranes (1).

14. The submarine desalination plant according to any one of the preceding claims, wherein the columns (4) have anchorings (23) in the upper part thereof for arranging a crossbeam (24) which is connectable to a sea craft (25) for transferring the desalination plant.

15. The submarine desalination plant according to any one of the preceding claims, wherein each desalination membrane (1) comprises two halves between which there is defined a hollow inner space for the circulation of the desalinated water, each half having a reverse osmosis semipermeable membrane layer (1.1) for converting seawater into desalinated water, a microperforated layer (1.2) for allowing the desalinated water to pass into the hollow inner space, and both halves being attached to one another by a reinforcement layer (1.3).

16. The submarine desalination plant according to any one of the preceding claims, wherein the desalination membranes (1) are separated from one another by means of separators (10) which are cylindrical parts arranged around the extraction pipe (2).

17. The submarine desalination plant according to any one of claims 13 to 16, wherein the desalination membranes (1) are further separated from one another by means of additional separators (10') which are cylindrical parts arranged around the additional pipes (9).

18. A method for arranging the submarine desalination plant of the preceding claims on the seabed (S), comprising:
• using a sea craft (25),
• transferring the support structure (3) with the sea craft (25) to a site location,
• arranging the support structure (3) on the seabed (S),
• transferring the desalination membranes (1) with the sea craft (25) to the site location, and
• arranging the desalination membranes (1) on the support structure (3) coupling the columns (4) with the connection openings (8).
